# EUROPÄISCHE PATENTSCHRIFT

(11) **EP 3 070 982 B1**
(45) Veröffentlichungstag und Bekanntmachung des Hinweises auf die Patenterteilung: **10.10.2018**
(21) Anmeldenummer: 16160650.4
(22) Anmeldetag: 16.03.2016
(51) Int. Cl.: H04W 52/02, H04B 1/3805, H04B 15/00, H04L 1/00

(54) **EMPFANGSEINRICHTUNG UND VERFAHREN ZUM BETREIBEN EINER EMPFANGSEINRICHTUNG**
RECEIVING DEVICE AND METHOD FOR OPERATING A RECEIVING DEVICE
DISPOSITIF DE RECEPTION ET PROCEDE DE FONCTIONNEMENT D'UN DISPOSITIF DE RECEPTION

(30) Priorität: 19.03.2015 DE 102015104141
(43) Veröffentlichungstag der Anmeldung: 21.09.2016
(73) Patentinhaber: Albert-Ludwigs-Universität Freiburg, 79098 Freiburg (DE); endiio GmbH, 1220 Wien (AT)
(72) Erfinder: UNGAN, Tolgay, 79110 Freiburg (DE); REINDL, Leonhard, 79117 Kirchzarten (DE); OSTERTAG, Thomas, 82538 Geretsried (DE); GAMM, Ulrich, 79104 Freiburg (DE)
(74) Vertreter: Epping - Hermann - Fischer

(56) Entgegenhaltungen:
- US-A1- 2005 020 321
- US-A1- 2009 110 035
- US-A1- 2009 135 886
- US-A1- 2009 252 042
- US-A1- 2010 040 120
- US-A1- 2012 171 978

## Beschreibung

Den Energieverbrauch zu senken ist heutzutage ein Hauptproblem bei der Weiterentwicklung von elektrischen Geräten. Viele Geräte werden aus Komfortgründen, aber auch aus der Notwendigkeit einer damit verbundenen betrieblichen Sicherheit heraus, ununterbrochen betrieben. Dies bedeutet, dass diese Geräte nicht erst eingeschaltet werden, wenn sie benötigt werden, sondern ununterbrochen in Betrieb sind. Dies ist insbesondere dann notwendig, wenn es sich bei dem Gerät um ein Drahtlos-Empfangsgerät handelt, bei dem nicht vorsehbar ist, wann es eine Information empfangen soll oder eine Information zum Empfang ausgesendet ist.

Anwendungen hierzu sind beispielsweise Geräte, die zur Überwachung von Sensoren dienen, die bei Eintreten eines Ereignisses das Vorliegen dieses Ereignisses und/oder auch damit verbundene Zusatzinformationen übertragen. Die Notwendigkeit zum Energiesparen ist insbesondere dann gegeben, wenn das Drahtlos-Empfangsgerät selber nicht an einem Spannungsversorgungsnetz angeschlossen ist. In einem solchen Fall liegen in der Regel ein Batteriebetrieb oder ähnliche autonome Energieversorgungen vor. Für das Betreiben derartiger Geräte ist es daher inzwischen üblich, diese in einen sogenannten Ruhezustand zu versetzen, indem Teile des Geräts zur Reduzierung des Energieverbrauchs abgeschaltet werden und, sobald das Gerät benötigt wird, "aufgeweckt", d.h. reaktiviert werden.

Hierzu ist beispielsweise aus der EP2572539B1 ein Gerät mit Betriebsartumschalter bekannt. Dies weist eine Detektorschaltung auf, die für minimalen Energieverbrauch ausgerichtet ist und das Vorliegen eines vorbestimmten Hochfrequenzsignals überwacht. Im Einzelnen bedeutet dies, dass dann, wenn auf einer bestimmten Frequenz eine vorbestimmte Information, wie beispielsweise eine Adresse, übertragen wird, die Detektorschaltung ein Aufwecksignal an einen Mikrocontroller weiterleitet, der daraufhin in seinen normalen Betriebszustand wechselt. Der "aufgeweckte" Mikrocontroller steuert daraufhin das weitere Aufwecken des elektronischen Geräts. Bei dem in der EP2572539B1 beschriebenen Verfahren wird die vom Detektor zu erkennende Adresse einem 125 kHz Signal mittels OOK-Modulation (On-Off-Modulation) aufgeprägt und mit diesem ein 868 MHz Trägersignal moduliert.

Weiterhin ist aus der US 2012/0171978 A1 unter Bezugnahme auf Figur 10A ein unterschiedliches Verfahren zur Gewinnung eines Aufwecksignals beschrieben. Gemäß der Absätze [0148] - [0152] dieses Dokumentes ist unter Bezugnahme auf Fig. 10A angegeben, dass dabei das empfangene Signal zuerst verstärkt und dann einem Demodulator zugeführt wird. Das Ausgangssignal des Demodulators wird zwei Filtern mit unterschiedlicher Bandbreite zugeführt. Der Vergleich der Signalstärken zwischen dem schmalbandigen Filter und dem breitbandigen Filter erfolgt mittels eines Komparators wobei die Frequenzbereiche überlappen.

Grundsätzlich arbeitet das beschriebene Gerät zufriedenstellend, weist jedoch den Nachteil auf, dass es empfindlich gegenüber Störsignalen ist. Dies bedeutet, dass der Nutzsignal-Störsignal-Abstand sich mit zunehmendem Abstand zwischen Sender und Empfänger verringert.
Es besteht deshalb die Aufgabe, eine Empfangseinrichtung und ein Betriebsverfahren hierfür vorzusehen, dass bei verminderter Empfindlichkeit gegenüber Störsignalen eine minimierte Stromaufnahme aufweist. Diese Aufgabe wird mit den in den nebengeordneten Patentansprüchen angegebenen Maßnahmen gelöst.
Es ist eine Empfangseinrichtung vorgesehen, die eine Signalschnittstelle, eine Energieversorgungsschnittstelle sowie eine Verarbeitungseinrichtung aufweist. Die Empfangseinrichtung ist dabei über die Energieversorgungsschnittstelle an eine Energiequelle anschließbar und ihr werden Signale über die Signalschnittstelle zugeführt. Über einen ersten Signalpfad werden dabei die Signale einer Differenz-Demodulationseinrichtung zugeführt. In dieser wird das Signal in zumindest zwei Bestandteile aufgelöst, demoduliert und von den beiden Demodulationssignalen die Differenz der Momentan-Amplituden gebildet. Dieses Differenzsignal wird einer Decodiereinrichtung zugeführt, die das Differenzsignal decodiert, eine Information gewinnt und mit einer vorgegebenen Information vergleicht und bei Übereinstimmung der gewonnenen Information mit der vorbestimmten Information ein Aufwecksignal über einen Aufweckpfad der Verarbeitungseinrichtung zuführt. Die Empfangseinrichtung ist dabei derart ausgebildet, dass sie bei Empfang des Aufwecksignals über die Aufweckverbindung aus einem Energie sparenden Ruhe-Betriebsmodus in einen Aktiv-Betriebsmodus überwechselt.

Vorteilhafterweise hat im Ruhe-Betriebsmodus zumindest die die Verarbeitungseinrichtung gegenüber dem Aktiv-Betriebsmodus eine eingeschränkte Funktionalität und verminderten Energieverbrauch, wodurch mit geringem Aufwand der Gesamtenergieverbrauch der Empfangseinrichtung reduziert ist.

Vorteilhafterweise ist die Verarbeitungseinrichtung über einen zweiten Signalpfad mit der Signalschnittstelle verbunden. Dies ermöglicht es, dass in dem zweiten Signalpfad eine Transceiver-Einrichtung vorgesehen ist, die im Aktiv-Betriebsmodus der Verarbeitungseinrichtung empfangene Informationen nach einer Demodulation an die Verarbeitungseinrichtung weiterleitet und über die von der Verarbeitungseinrichtung auszusendende Information mittels Modulation in ein Sendesignal umgewandelt wird, um dieses über die Signalschnittstelle auszusenden.
In einer vorteilhaften Ausgestaltung ist die Signalschnittstelle über eine Schalteinrichtung entweder mit dem ersten oder dem zweiten Signalpfad verbunden. Zur Steuerung der Schalteinrichtung ist die Verarbeitungseinrichtung mit der Schalteinrichtung über eine Steuerleitung verbunden. Auf diese Weise kann die Verarbeitungseinrichtung die Schalteinrichtung derart steuern, dass dann, wenn die Verarbeitungseinrichtung im Ruhemodus ist, die Schalteinrichtung die Signalschnittstelle mit dem ersten Signalpfad verbindet.
Ist die Verarbeitungseinrichtung im Aktiv-Betriebsmodus, wird die Schalteinrichtung von der Verarbeitungseinrichtung derart angesteuert, dass die Schalteinrichtung die Signalschnittstelle mit dem zweiten Signalpfad verbindet. Dies hat den Vorteil, dass nur entweder der erste Signalpfad oder der zweite Signalpfad mit der Signalschnittstelle verbunden sind, was die Anpassung der Gleichricht-Differenzschaltung und der Transceiver-Schaltung an eine mit der Hochfrequenzsignalschnittstelle angeschlossene Antenneneinrichtung erleichtert, wenn das Signal ein Hochfrequenzsignal ist. Die Schnittstelle ist dabei vorteilhaft über eine Antennenleitung mit einer Antenneneinrichtung verbunden.

Darüber hinaus bewirkt das Umschalten auf den ersten oder zweiten Signalpfad, dass ohne Eingangssignal die Transceiver-Einheit von sich aus weniger Strom verbraucht.

Da der zweite Signalpfad bidirektional ausgebildet ist, ist es auch möglich, dass über diesen Pfad die Verarbeitungseinrichtung der Transceiver-Einrichtung nicht nur eine Information zum Aussenden übermittelt, sondern auch einen Befehl, damit die Transceiver-Einrichtung in einen Ruhemodus sich versetzt bzw. aus dem Ruhemodus in einen Aktiv-Betriebsmodus gesteuert wird.
Alternativ kann hierfür ein zusätzlicher Signalpfad vorgesehen sein, was die Steuerung der Transceiver-Einheit vereinfacht.

In einer vorteilhaften Ausgestaltung weist die Gleichricht-Differenzschaltung zwei parallel geschaltete Filterstufen auf, die das über die Hochfrequenzsignalschnittstelle zugeführte Hochfrequenzsignal in zwei Frequenzbereiche aufteilen, die mittels einer jeweiligen Gleichricht-Einrichtung demoduliert werden. Die demodulierten Signale der beiden Gleichricht-Einrichtungen werden einer Differenzstufe zugeführt, die ein Differenzsignal der beiden demodulierten Signale erzeugt. Dies weist den Vorteil auf, dass durch die Differenzbildung Störsignale, die dem zugeführten Hochfrequenzsignal überlagert sind, in beiden demodulierten Signalen enthalten sind, sodass durch die Differenzbildung die Störsignale eliminiert werden.

Die Einrichtung und das Verfahren zum Betreiben dieser Einrichtung ist vorteilhaft für jegliche Art von Signalen geeignet, bis hin zu Schallsignalen, insbesondere Ultraschallsignale.

Nachfolgend wird die Erfindung anhand von Ausführungsbeispielen unter Bezugnahme auf die Figurenbeschreibung näher erläutert.

Es zeigen:
- Figur 1: eine schematische Darstellung eines ersten Ausführungsbeispiels einer Empfangseinrichtung,
- Figur 2: ein erstes Ausführungsbeispiel des ersten Signalpfads,
- Figur 3: eine parallele Darstellung der Signale in der Zeitebene und
- Figur 4: eine alternative Ausführungsform des ersten Signalpfads,
- Figur 5: eine schematische Darstellung eines zweiten Ausführungsbeispiels einer Empfangseinrichtung.

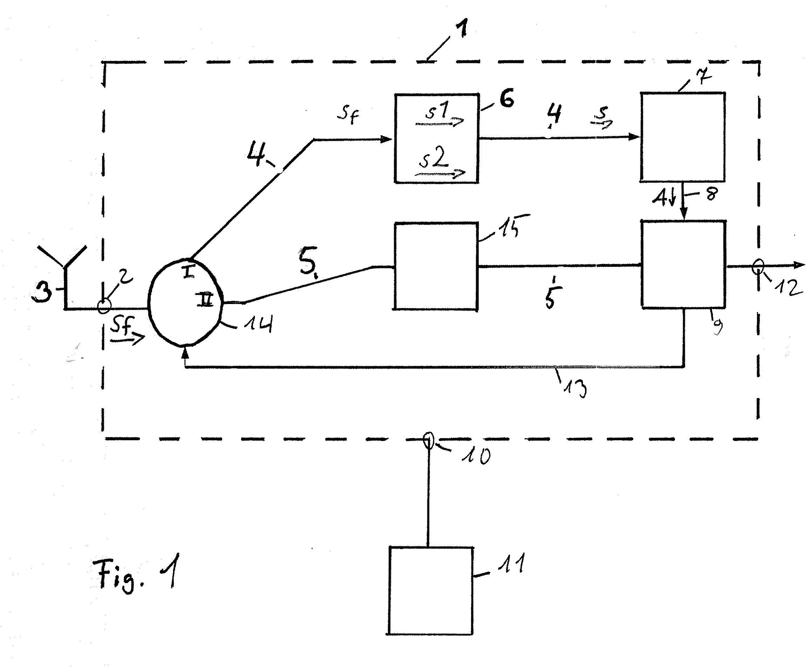

Figur 1 zeigt ein Blockschaltbild einer Empfangseinrichtung 1. Diese weist eine Hochfrequenzsignalschnittstelle 2, eine Energieversorgungsschnittstelle 10 und eine Funktionsschnittstelle 12 auf. Über die Energieversorgungsschnittstelle 10 wird die Empfangseinrichtung mit der notwendigen Energie aus einer Energieversorgung 11 versorgt. Die Energieversorgung 11 kann dabei die Energie über einen Netzspannungsanschluss, aber auch über einen Batterie, Akkumulator und/oder eine generative Energieversorgung wie Solarzellen oder elektromechanische Energiewandler oder Kombinationen aus diesen versorgt werden.

Über die Hochfrequenzsignalschnittstelle 2 wird der Empfangseinrichtung 1 ein Hochfrequenzsignal Sf zugeführt, das über eine an den Frequenzbereich des Hochfrequenzsignals angepasste Antenne 3 empfangen wird. Die Antenne 3 ist dabei direkt oder über eine geeignete Antennenleitung mit der Hochfrequenzsignalschnittstelle 2 verbunden. Die Antennenleitung ist in Figur 1 nicht dargestellt, genauso wenig wie in der Hochfrequenztechnik übliche Anpasselemente, um die Funkantenne beispielsweise an die Antennenleitung oder den Eingangs- bzw. Ausgangswiderstand der Hochfrequenzsignalschnittstelle anzupassen.

Die Funktionsschnittstelle 12 ist dazu da, dass die Empfangseinrichtung 1 mit anderen mit ihr verbundenen Geräten kommunizieren kann. Dabei ist zumindest vorgesehen, dass eine in der Empfangseinrichtung 1 vorgesehene Verarbeitungseinrichtung 9 eine Information an zumindest ein über die Funktionsschnittstelle verbundenes Gerät (nicht dargestellt) zuführt. Es ist jedoch auch möglich, dass die Funktionsschnittstelle 12 bidirektional ausgeführt ist, um der Verarbeitungseinrichtung Signale zuzuführen, beispielsweise dann, wenn die Verarbeitungseinrichtung aus einem programmierbaren Mikrocontroller besteht, um diesen zu programmieren.

Mit der Hochfrequenzsignalschnittstelle 2 ist ebenfalls eine Schalteinrichtung 14 verbunden, die zumindest zwei Schaltstellungen I und II aufweist. An die erste Schaltstellung I ein erster Signalpfad und an die zweite Schaltstellung II ein zweiter Signalpfad 5 angeschlossen. Die Schalteinrichtung 14 ist über eine Steuerverbindung 13 mit der Verarbeitungseinrichtung 9 verbunden, die die Schalteinrichtung 14 derart steuert, dass zumindest entweder die Hochfrequenzschnittstelle 2 mit dem ersten Signalpfad 4 oder dem zweiten Signalpfad 5 verbunden ist. Die Verarbeitungseinrichtung 9 ist dabei so ausgestaltet, dass sie zumindest zwei Betriebsmodi aufweist, nämlich entweder einen Aktiv-Betriebsmodus oder einen Ruhe-Betriebsmodus. Im Aktiv-Betriebsmodus steuert die Verarbeitungseinrichtung die Schalteinrichtung 14 so, dass die Hochfrequenzsignalschnittstelle 2 mit dem zweiten Signalpfad 5 verbunden ist. Im Ruhe-Betriebsmodus ist die Funktionalität der Verarbeitungseinrichtung 9 so weit reduziert, dass die Verarbeitungseinrichtung 9 allein dazu in der Lage ist, auf ein über eine Aufweckleitung 8 zugeführtes Aufwecksignal A zu reagieren und in den Aktiv-Betriebsmodus zu wechseln. Geht die Verarbeitungseinrichtung 9 in den Ruhe-Betriebsmodus über, steuert sie zuvor über die Steuerverbindung 13 die Schalteinrichtung 14 derart, dass die Hochfrequenzsignalschnittstelle 2 mit dem ersten Signalpfad 4 verbunden ist. Die Erfindung ist dabei nicht darauf beschränkt, dass die Verarbeitungseinrichtung 9 ausschließlich einen Ruhe-Betriebsmodus und einen Aktiv-Betriebsmodus einnehmen kann. Diese können jedoch zumindest unter dem Aktiv-Betriebsmodus subsummiert werden.

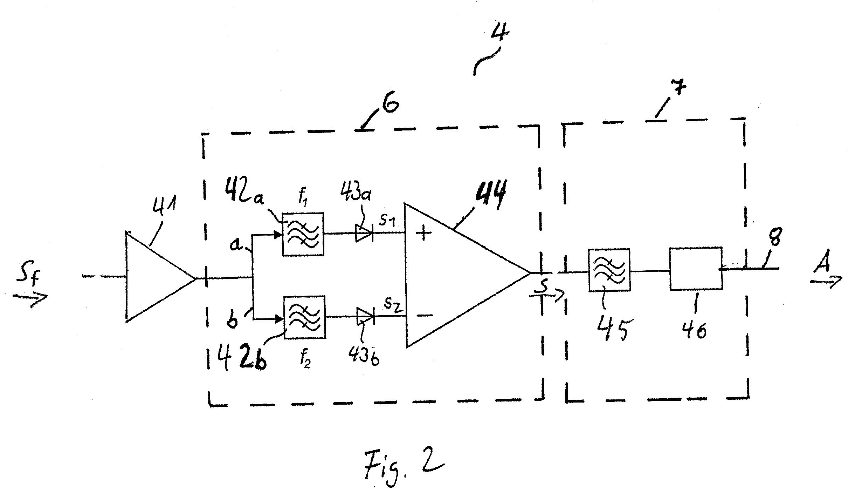

Der erste Signalpfad 4 ist derart ausgestaltet, dass bei Vorliegen des Ruhe-Betriebsmodus der Verarbeitungseinrichtung 9 ein empfangenes Hochfrequenzsignal Sf zunächst einer Gleichricht-Differenzschaltung 6 zugeführt wird. Diese wird in der weiteren Beschreibung unter Bezugnahme auf Figur 2 als eine Ausgestaltung näher erläutert. Zunächst sei vorausgesetzt, dass ein demoduliertes Differenzsignal S, das weitgehend von Störungen befreit ist, danach einer Decodiereinrichtung 7 zugeführt wird, die das demodulierte Signal S in eine Information umwandelt und daraufhin überprüft, ob eine vorgegebene Information übermittelt wurde. Im Einzelnen wird die Decodiereinrichtung ebenfalls nachfolgend unter Bezugnahme auf Figur 2 erläutert.

Es wird zunächst festgestellt, dass bei Vorliegen einer vorbestimmten Information, die über den ersten Signalpfad 4 zugeführt wird, die Decodiereinrichtung 7 ein als Aufwecksignal A wirkendes Signal über eine Aufweckleitung 8 der Verarbeitungseinrichtung 9 zuführt. Damit ist zunächst einmal grundsätzlich die Aufweckfunktion der Empfangseinrichtung 1 erläutert.

Ist das Aufwecken der Verarbeitungseinrichtung 9 erfolgt, steuert die Verarbeitungseinrichtung 9, wie zuvor bereits erläutert, die Schalteinrichtung 14 derart, dass die Hochfrequenzsignalschnittstelle in der Schaltstellung II mit dem zweiten Signalpfad verbunden ist, in dem dann zwischen der Verarbeitungseinrichtung 9 und der Schalteinrichtung 14 eine Transceiver-Einrichtung zwischengeschaltet ist. Eine derartige Transceiver-Einrichtung 15 wird im Folgenden nicht weiter erläutert. Es wird nur darauf hingewiesen, dass diese zum Empfangen und Aussenden von Hochfrequenzsignalen über die Hochfrequenzsignalschnittstelle 2 ausgebildet ist und der mit der Transceiver-Einrichtung verbundenen Verarbeitungseinrichtung 9 Informationen zuführt, die über das empfangene Hochfrequenzsignal übermittelt wurden und soweit aufbereitet sind, dass die Verarbeitungseinrichtung 9 diese Information verarbeiten kann. Genauso ist die Transceiver-Einrichtung 15 dazu ausgelegt, von der Verarbeitungseinrichtung 9 ihr zugeführte Informationen in ein geeignetes Hochfrequenzsignal umzuwandeln, sodass es über die Hochfrequenzsignalschnittstelle 2 mittels der angeschlossenen Antenne 3 ausgesendet werden kann.

Ergänzend wird auf die Möglichkeit hingewiesen, dass der erste und der zweite Signalpfad 4 und 5 auch ohne Schalteinrichtung 14 direkt passiv an die Hochfrequenzsignalschnittstelle angeschlossen sein können.

Es kann aber auch auf die Funktionsschnittstelle 12 verzichtet werden, wenn es sich um Einrichtungen wie beispielsweise sogenannte "long range Ident-Marken" handelt. Diese können somit aus einen Ruhe-Betriebsmodus auf einfache Weise in den Aktiv-Betriebsmodus versetzt werden.

In einem nicht dargestellten Ausführungsbeispiel kann zusätzlich die Verarbeitungseinrichtung 9 mit einer ergänzenden Steuerleitung 13 mit der Transceiver-Einrichtung 15 verbunden sein, um die Transceiver-Einrichtung 15 aktiv in einen Ruhe-Betriebsmodus zu steuern, bevor sie selbst in den Ruhe-Betriebsmodus wechselt und nach einem Übergang von dem Ruhe-Betriebsmodus in den Aktiv-Betriebsmodus die Transceiver-Einrichtung 15 ebenfalls in einen entsprechenden Aktiv-Betriebsmodus versetzt.

Figur 2 zeigt den ersten Signalpfad 4. In diesem ist zunächst optional ein Vorverstärker 41 vorgesehen. Ob dieser Anwendung findet oder nicht, hängt nicht allein von der Verfügbarkeit der Energie zum Betreiben des Vorverstärkers 41 sondern auch vom Anwendungsgebiet ab, d. h. letztendlich von der Länge der Übertragungsstrecke für das zugeführte Hochfrequenzsignal und von den typischen Störsignalen im Umfeld. Hinter dem Vorverstärker 41 folgend zweigt sich der Signalpfad 4 in zwei parallele Teilpfade a und b auf. Diese unterscheiden sich darin, dass jeweils ein Filter 42a bzw. 42b vorgesehen sind, die in diesem Signalpfad unterschiedliche Frequenzbereiche im selben Frequenzband durchlassen. Für diese Filter 42a und 42b in den Teilpfaden a und b gilt, damit sie die beschriebene Funktionalität einer Frequenzweiche erfüllen, dass sie keine überlappenden Frequenzbereich aufweisen. Nur so kann sichergestellt werden, dass das jeweils andere korrespondierende Signal nicht durchgelassen wird, was zu einer Schwächung des Nutzsignals führen würde.

Auf diese Weise werden zwei Signale, die in einem Frequenzband gleichzeitig empfangen werden, mittels der beiden unterschiedlichen Filter 42a und 42b auf die beiden Teilpfade a und b aufgeteilt. Ein Beispiel ist hierfür, wenn im UHF-Band gleichzeitig zwei Signale von beispielsweise a: F1= 863 MHz und b: F2= 873 MHz übertragen werden, so werden diese gemäß Figur 2 auf die beiden dargestellten Teilpfade a und b für F1 und F2 aufgeteilt.

Dem Filter nachfolgend ist jeweils eine Diode, wie beispielsweise eine Schottky-Diode 43a und 43b, vorgesehen, die mit ihren Kathoden jeweils an den positiven bzw. negativen Anschluss eines Differenzverstärkers 44 angeschlossen sind und als Detektor funktionieren.

Neben der dargestellten Serienschaltung der Dioden als Detektor ist gleichberechtigt auch eine Schaltungsanordnung als sogenannter "shunt-Detektor" realisierbar. Genauso ist die Polarität unerheblich, es ist auch eine negative Detektorspannung verwendbar, auch wenn diese Schaltungsbeispiele nicht in den Figuren dargestellt sin.

Diese beiden Signale sind mit s1 und s2 bezeichnet. Das am Ausgang des Differenzverstärkers 44 anliegende Differenzsignal s ist somit s = s1 - s2. Dieses Differenzsignal s wird nachfolgend einem Demodulator 45 und danach einem Komparator 46 zugeführt. Der Demodulator 45 soll im vorliegenden Ausführungsbeispiel als Bandpassfilter ausgebildet sein. Hierfür sind insbesondere passive Bandpassfilter, z.B. unter Verwendung eines Stimmgabelquarzes, geeignet, da diese keine zusätzliche Energieversorgung benötigt. Das so gewonnene Signal wird dem Komparator 46 zugeführt, der das Signal bzw. die damit verbundene Information mit einer vorgegebenen Information vergleicht und bei Übereinstimmung am Ende ein Signal ausgibt. Dabei handelt es sich um das zuvor unter Bezugnahme auf Figur 1 bereits erläuterte Aufwecksignal A, das über die Aufweckleitung 8 der Verarbeitungseinrichtung 9 zugeführt wird. Als besondere Ausführung kann die Dekodiereinrichtung 7 derart ausgebildet sein, dass der Komparator 46 erst aktiviert wird, wenn eine Modulation festgestellt ist.

Im Vergleich mit Figur 1 stellen somit die Filter 42a, 42b, die Dioden 43a und 43b und der Differenzverstärker 44 die Gleichricht-Differenzschaltung 6 dar und das Filter 45 und der Komparator 46 die Decodiereinrichtung 7.

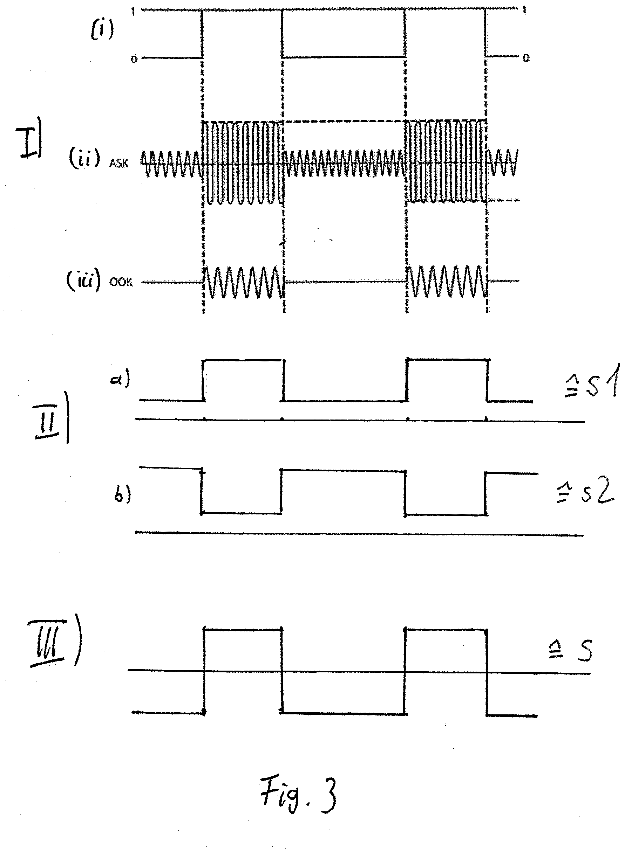

Nachfolgend wird unter Bezugnahme auf Figur 3 die Funktionsweise näher erläutert. In Sektion I ist ein Signal (i)dargestellt, das zwischen den Zuständen 0 und 1 wechselt. Zur Übertragung einer solchen digitalen Information hat sich z. B. die Modulation gemäß sogenanntem "amplitude shift keying (ASK)", wie bei (ii) dargestellt, oder dem sogenannten "on-off-keying (OOK)", wie bei (iii) dargestellt, als geeignet erwiesen. Letztendlich ist das OOK-Verfahren eine Sonderform des ASK-Verfahrens, bei dem die Amplitude eines Signals mit dem Umspringen von einem logischen Zustand in den anderen Zustand wechselt. Hierzu ist bei ii erkennbar, dass die Amplitude bei einem logischen Zustand 0 einen niedrigeren Wert hat als beim logischen Zustand 1. Demgegenüber ist die Amplitude nach dem OOK-Verfahren, wie bei (iii) gezeigt, beim logischen Wert 0 = 0 und beim logischen Wert 1 ≠ 0. Der relevante Unterschied zwischen "ASK" und "OOK" ist dabei, dass in den beiden Zuständen bei "ASK" ein Wert ungleich Null eingenommen wird und bei "OOK" ein Zustand bei "Null" liegt welcher den Wert "0" oder "1" repräsentiert hängt dabei allein von der Konvention ab.

In Sektion II sind zwei Signale a), b) dargestellt, die, wie zuvor erwähnt, im UHF-Band mit F1 = 863 MHz und F2 = 873 MHz gleichzeitig ASK-moduliert übertragen und wieder demoduliert wurden. Dabei ist jedoch zu beachten, dass die beiden Signale a),b) genau gegengleich moduliert sind. Dies bedeutet, dass a) beim logischen Zustand 1 den hohen Amplitudenwert und b) den niedrigen Amplitudenwert einnimmt.

Für die Funktion der vorliegenden Aufweckschaltung wird somit ein Signal Sf erzeugt, bei dem die Information, die das Aufwecken verursacht, auf zwei unterschiedlichen Frequenzen f1 und f2, nach dem ASK-Verfahren mit gegengleicher Logik moduliert ist. Wird ein solches Signal Sf über die Hochfrequenzsignalschnittstelle 2 in Figur 1 dem ersten Signalpfad 4 zugeführt, so ist gemäß Figur 2 in Sektion II in a) und b)erkennbar, dass die beiden nach entgegengesetzter Logik modulierten Signale durch die beiden Filter 42a und 42b getrennt demoduliert und als Signale s1 und s2 dem Differenzverstärker 44 zur Differenzbildung zugeführt werden.

In Sektion III von Figur 3 ist das sich durch die Differenzbildung ergebende Differenzsignal s des Differenzverstärkers 44 zu sehen. Dieses entspricht wiederum dem in Sektion 1 in (i) dargestellten Signalverlauf mit seinem Umspringen zwischen den logischen Zuständen 0 und 1. Es ist leicht zu erkennen, dass auch die Verwendung des "OOK-Verfahrens" zu dem gleichen Ergebnis führt. Wie bereits eingangs erwähnt, werden Störsignale, die zwangsweise durch Verwendung des gleichen Übertragungswegs auf beiden Signalen gleich vorhanden sind, durch die Differenzbildung, wie bereits eingangs erwähnt, eliminiert. Dieses Differenzsignal s wird dem Bandpassfilter 45, das auf die Übertragungsrate der zu übertragenden Information abgestimmt ist, zugeführt und somit ein zu verarbeitendes Signal gewonnen, das wie bereits zuvor zu Figur 2 erläutert, dem Komparator 46 zugeführt wird.

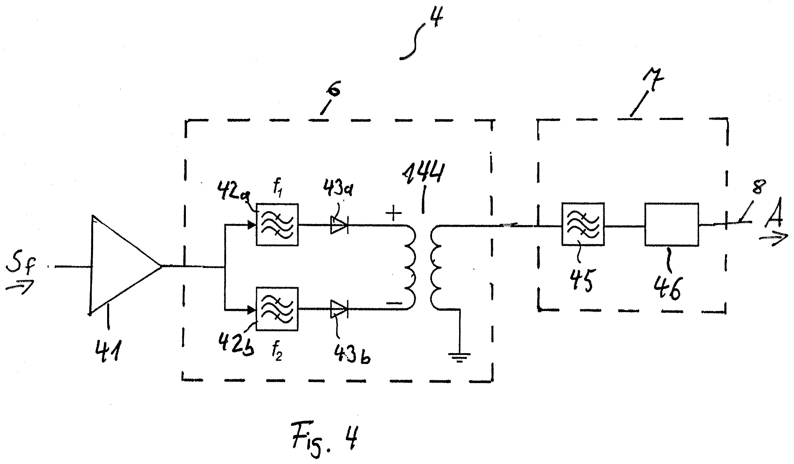

Figur 4 zeigt eine alternative Ausführungsform des ersten Signalpfads 4, bei dem anstelle des Differenzverstärkers nunmehr ein passives Bauelement, nämlich ein differenzbildender Transformator 144, verwendet wird. Dieser weist zwei differenzbildende Spuleneingänge auf, die mit "+" und "-" symbolisiert sind und einen galvanisch getrennten Spulenausgang, an dem das Differenzsignal s, vergleichbar zu dem Ausgangssignal des Differenzverstärkers 44 in Fig.2, ausgegeben wird. Vorteil einer derartigen Anordnung ist, dass die Differenzbildung ohne zusätzliche Energieversorgung erfolgt. Darüber hinaus sind gemäß Figur 4 gleiche Elemente wie in Figur 2 verwendet, sodass diese Anordnung gegenüber Figur 2 funktionsgleich ist. Wenn auf die Potentialtrennung im ersten Signalpfad 4 verzichtet wird, kann der differenzbildende Transformator als sogenannter "Spartransformator" ausgebildet sein. Wesentlicher Vorteil des Ausführungsbeispiels mit einem differenzbildenden Transformator ist, dass für die Differenzbildung außer dem Signal keine Energie zugeführt werden muss.

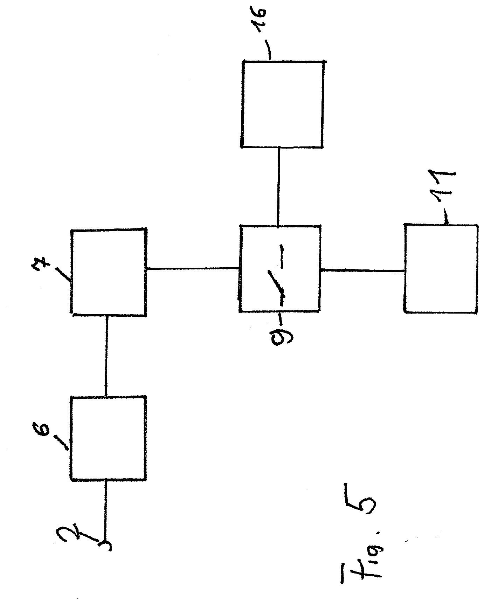

Fig. 5 Zeigt ein zweites Ausfürungsbeispiel einer Empfangseinrichtung, bei dem die Empfangseinrichtung eine Signalschnittstelle 2 aufweist, der leitungsgebunden ein Signal zugeführt wird. Mit der Signalschnittstelle 2 ist eine Gleichricht-Differenzschaltung 6 und diese wiederum mit einer Dekodiereinrichtung 7 verbunden. Das Aufwecksignal wird einer Versorgungs-Schalteinrichtung 9 zugeführt, die derart ausgebildet ist, dass nach dem Zuführen des Aufwecksignals eine zuvor geöffnete Verbindung zwischen einer Energieversorgung 11 und einem Energieverbraucher 16 geschlossen wird. Dabei sind die Gleichricht-Differenzschaltung 6 und die Dekodiereinrichtung 7 wie unter Bezugnahme auf Fig.2 beschrieben ausgeführt.

Die zuvor gemachten Erläuterungen beziehen sich auf die in den Figuren gezeigten Ausführungsbeispiele. Als weitere alternative Ausgestaltung wird hiermit unter Bezug auf Fig.2 darauf hingewiesen, dass die Frequenzweiche mittels der Filter 42a und 42b auch mittels einer Aufteilung in unterschiedliche Frequenzbänder realisierbar ist. Hierzu müssen die beiden Signale in unterschiedlichen Frequenzbändern übertragen werden. Ist die Signalschnittstelle an eine Antenne 3 angeschlossen, so muss diese auch für beide Frequenzbänder geeignet ausgelegt sein.

Weiterhin ist es natürlich auch möglich die Differenzbildung über mehr als zwei Signale in mehr als zwei verschiedenen Frequenzbereichen durchzuführen.

Die zuvor unter Bezugnahme auf Ausführungsbeispiel erläuterte Empfangseinrichtung ist in einer Vielzahl von Anwendungen eisetzbar. So z.B. bei der Überwachung von Sensoren, insbesondere batteriebetriebenen Sensoren, wenn diese nur selten abgefragt werden. Ein weiteres Beispiel ist die Fernerfassung von Zählerständen von Wasseruhren, Gaszählern etc. So können beispielsweise die Kunden straßenzugweise abgefahren werden und im Vorbeifahren die Zähler "aufgeweckt" und abgerufen werden. Weiterhin finden sich Anwendungen bei der Langzeitüberwachung von Batterien. Damit wird verhindert, dass die Batterien nicht durch die Überwachungsmaßname mehr entladen wird als durch die Anwendung, für die die Batterie vorgesehen ist.
Schließlich sind Anwendungen für sogenannte "Consumer Produkte" vorgesehen, die zunehmend drahtlos betrieben werden, wie beispielsweise Lautsprecher, Computermäuse und ähnliches, damit diese in einen wirksam energiesparenden Ruhe-Betriebsmodus und wieder zuverlässig in den Aktiv-Betriebsmodus zu versetzen.

## Patentansprüche

1. Empfangseinrichtung zum Empfang von Signalen mit On-Off-Kodierung oder Amplituden-Shift-Kodierung mit einer Signalschnittstelle (2), einer Versorgungsschnittstelle (10), einem ersten Signalpfad (4), der mit der Signalschnittstelle (2) verbunden ist,
- wobei der erste Signalpfad (4) zumindest eine Gleichricht-Differenzeinrichtung (6) und eine Dekodiereinrichtung (7) aufweist und die Dekodiereinrichtung (7) mit einer Verarbeitungseinrichtung (9) über einen Aufweckpfad (8) verbunden ist,
- wobei die Gleichricht-Differenzeinrichtung (6) derart ausgebildet ist, dass ein über die Signalschnittstelle (2) zugeführtes Signal (Sf) in mindestens zwei unterschiedliche Frequenzsignalteile aufgeteilt, diese demoduliert und die Differenz der Momentan-Amplituden der beiden demodulierten Signale gebildet und das Differenzsignal (S) einer Dekodiereinrichtung (7) zugeführt wird,
- wobei die Dekodiereinrichtung (7) derart ausgebildet ist, dass sie aus dem Differenzsignal (S) eine Information gewinnt, diese mit einer vorbestimmten Information vergleicht und bei Übereinstimmung über einen Aufweckpfad (8) ein Aufwecksignal der Verarbeitungseinrichtung (9)zuführt,
- - wobei die Empfangseinrichtung derart ausgebildet ist, dass sie zumindest in einem Aktiv-Betriebsmodus und einem Ruhe-Betriebsmodus betreibbar ist, und bei Empfang des Aufwecksignales vom Ruhe-Betriebsmodus in den Aktiv-Betriebsmodus wechselt, **dadurch gekennzeichnet, dass** die unterschiedlichen Frequenzsignalteile keine überlappenden Frequenzbereiche aufweisen.

2. Empfangseinrichtung nach Anspruch 1, wobei die Verarbeitungseinrichtung (9) in dem Ruhe-Betriebsmodus gegenüber dem Aktiv-Betriebsmodus eine eingeschränkte Funktionalität und verminderten Energieverbrauch aufweist und bei der mit der Versorgungsschnittstelle (10) eine Energiequelle (11) verbunden ist.

3. Empfangseinrichtung nach Anspruch 1 oder 2, bei der ein zweiter Signalpfad (5) derart ausgebildet ist, dass eine Transceiver-Einrichtung (15) mit der Verarbeitungseinrichtung (9) und mit der Signalschnittstelle (2) verbunden ist,
- wobei die Transceiver-Einrichtung (15) derart ausgebildet ist, dass sie ein über die Signalschnittstelle (2) zugeführtes Signal demoduliert und darin enthaltende Informationen der Verarbeitungseinrichtung (9) zuführt, so dass diese die zugeführte Information im Aktiv-Betriebsmodus verarbeiten kann.

4. Empfangseinrichtung nach Anspruch 3, bei dem die Transceiver-Einrichtung (15) derart ausgebildet ist, dass sie von der Verarbeitungseinrichtung (9) über den zweiten Signalpfad (5) zugeführte Information in ein Signal umwandelt und dieses über die Signalschnittstelle (2) aussendet.

5. Empfangseinrichtung nach einem der Ansprüche 2 bis 4, wobei eine Schalteinrichtung (14) vorgesehen ist, die die Signalschnittstelle (2) in zumindest einer ersten Schaltstellung (I) mit dem ersten Signalpfad (4) und in zumindest einer zweiten Schaltstellung (II) mit dem zweiten Signalpfad (5) verbindet.

6. Empfangseinrichtung nach Anspruch 5, wobei die Schalteinrichtung (14) über eine Steuerverbindung (13) mit der Verarbeitungseinrichtung (9) verbunden ist, über die die Verarbeitungseinrichtung (9) der Schalteinrichtung (14) im Aktiv-Betriebsmodus Steuersignale zuführt und/oder bei der die Schalteinrichtung (14) derart ausgebildet ist, dass sie bei Wegfall eines Steuersignales nach einem vorgegebenen Zeitabschnitt selbsttätig die erste Schaltstellung (I) einnimmt.

7. Empfangseinrichtung nach einem der Ansprüche 2 bis 6, bei der die Transceiver-Einrichtung (15) mit der Verarbeitungseinrichtung (9) derart verbunden und ausgebildet ist, dass sie entweder über den zweiten Signalpfad (5) oder über eine zusätzliche zweite Steuerverbindung von der Verarbeitungseinrichtung (9) ein Signal empfangen kann, so dass sie, wie die Verarbeitungseinrichtung (9), zwischen einem Aktiv-Betriebsmodus und einen Ruhe-Betriebsmodus wechseln kann.

8. Empfangseinrichtung nach einem der vorhergehenden Ansprüche, bei der die Gleichricht-Differenzeinrichtung (6) zwei parallel geschaltete Filterstufen (42a, 42b) aufweist, die das zugeführte Signal in zwei Frequenzbereiche aufteilt und zwei Dioden (43a, 43b) aufweist, die die beiden aufgeteilten Frequenzbereiche jeweils in ein Signal demodulieren und das jeweilige demodulierte Signal (s1,s2) dem positiven oder negativen Eingang eines Differenzverstärkers (44) zuführt.

9. Empfangseinrichtung nach einem der vorhergehenden Ansprüche, wobei eine Funktionsschnittstelle (12) vorgesehen ist, über die ein Informationsaustausch der Verarbeitungseinrichtung (9) mit einem mit der Empfangseinrichtung verbundenen Gerät durchführbar ist.

10. Empfangseinrichtung nach Anspruch 9, bei dem die Verarbeitungseinrichtung (9) derart ausgebildet ist, dass sie zumindest dem einen mit der Empfangseinrichtung (1) verbundenen weiteren Gerät ein Signal zuführen kann, mit dem das verbundene Gerät wie die Verarbeitungseinrichtung (9) zwischen einem Ruhe-Betriebsmodus und einem Aktiv-Betriebsmodus umschaltbar ist.

11. Empfangseinrichtung nach einem der vorhergehenden Ansprüche, bei der das empfangene Signal und/oder das gesendete Signal ein Hochfrequenzsignal ist und die Signalschnittstelle (2) als Hochfrequenzsignalschnittstelle ausgebildet ist und bei der die Hochfrequenzschnittstelle (2) direkt oder über eine Hochfrequenzleitung mit einer Antenneneinrichtung (3) verbunden ist.

12. Empfangseinrichtung nach einem der Ansprüche 1-10, bei der das empfangene Signal und/oder das gesendete Signal ein Schallsignal ist und die Signalschnittstelle (2) als Schallsignalschnittstelle ausgebildet ist.

13. Verfahren zum Betreiben einer Empfangseinrichtung,
- bei der ein Signal in zumindest zwei getrennte Signalteile aufgeteilt wird,
- die beiden Signalteile gleichzeitig demoduliert werden und von den demodulierten Signalen die Differenz der Momentan-Amplituden gebildet wird,
- nach der Differenzbildung aus dem Differenzsignal eine Information gewonnen und mit einer vorgegebenen Information verglichen wird und bei Übereinstimmung der gewonnenen und der verglichenen Information ein Aufwecksignal generiert wird,
- bei dem die beiden Signalteile durch eine gegengleiche sogenannte On-Off-Kodierung oder eine sogenannte Amplituden-Shift-Kodierung gebildet sind;
**dadurch gekennzeichnet, dass** die beiden Signalteile keine überlappenden Frequenzbereiche aufweisen.

14. Verfahren nach Anspruch 13, bei dem das Vergleichen einer Information erst aktiviert wird, nachdem eine demodulierte Information erkannt wurde.

## Claims

1. Receiver for receiving signals with on-off coding or amplitude shift coding with a signal interface (2), a supply interface (10), a first signal path (4), which is connected with the signal interface (2),
- the first signal path (4) having at least one rectifying differentiator (6) and a decoding means (7) and the decoding means (7) being connected with a processing means (9) via a wake-up path (8),
- the rectifying differentiator (6) being configured such that a signal (Sf) supplied via the signal interface (2) is divided into at least two different frequency signal parts, these are demodulated and the difference in the instantaneous amplitudes of the two demodulated signals is established and the differential signal (S) supplied to a decoding means (7),
- the decoding means (7) being configured such that it obtains information from the differential signal (S), compares this with predetermined information and, in the case of a match, supplies a wake-up signal to the processing means (9) via a wake-up path (8),
- - the receiver being configured such that it is operable at least in an active mode of operation and a sleep mode of operation and, on receipt of the wake-up signal, changes from the sleep mode of operation into the active mode of operation, **characterized in that** the different frequency signal parts do not have any overlapping frequency ranges.

2. Receiver according to claim 1, wherein the processing means (9) has reduced functionality and lower energy consumption in the sleep mode of operation relative to the active mode of operation and in which an energy source (11) is connected to the supply interface (10).

3. Receiver according to claim 1 or 2, in which a second signal path (5) is configured such that a transceiver means (15) is connected to the processing means (9) and to the signal interface (2),
- wherein the transceiver means (15) is configured such that it demodulates a signal supplied via the signal interface (2) and supplies information contained therein to the processing means (9), such that the latter can process the supplied information in the active mode of operation.

4. Receiver according to claim 3, in which the transceiver means (15) is configured such that it converts information supplied by the processing means (9) via the second signal path (5) into a signal and emits this via the signal interface (2).

5. Receiver according to one of claims 2 to 4, wherein a switching means (14) is provided, which connects the signal interface (2) in at least one first switch position (I) with the first signal path (4) and in at least one second switch position (II) with the second signal path (5).

6. Receiver according to claim 5, wherein the switching means (14) is connected to the processing means (9) via a control connection (13) via which the processing means (9) supplies control signals to the switching means (14) in the active mode of operation and/or in which the switching means (14) is configured such that it automatically adopts the first switch position (I) after a predetermined period of time if a control signal is discontinued.

7. Receiver according to one of claims 2 to 6, in which the transceiver means (15) is connected with the processing means (9) and configured such that it may receive a signal from the processing means (9) either via the second signal path (5) or via an additional second control connection, such that it may, like the processing means (9), change between an active mode of operation and a sleep mode of operation.

8. Receiver according to one of the preceding claims, in which the rectifying differentiator (6) comprises two parallel-connected filter stages (42a, 42b), which divide the supplied signal into two frequency ranges, and comprises two diodes (43a, 43b), which demodulate the two divided frequency ranges in each case into a signal and supply the respective demodulated signal (s1, s2) to the positive or negative input of a differential amplifier (44).

9. Receiver according to one of the preceding claims, wherein a functional interface (12) is provided, via which information exchange of the processing means (9) may be performed with a device connected with the receiver.

10. Receiver according to claim 9, in which the processing means (9) is configured such that it may supply, at least to the one further device connected with the receiver (1), a signal with which the connected device may be switched over, like the processing means (9), between a sleep mode of operation and an active mode of operation.

11. Receiver according to one of the preceding claims, in which the received signal and/or the transmitted signal is a high frequency signal and the signal interface (2) takes the form of a high frequency signal interface and in which the high frequency interface (2) is connected to an antenna means (3) directly or via a high frequency line.

12. Receiver according to one of claims 1-10, in which the received signal and/or the transmitted signal is an acoustic signal and the signal interface (2) takes the form of an acoustic signal interface.

13. Method for operating a receiver,
- in which a signal is divided into at least two separate signal parts,
- the two signal parts are simultaneously demodulated and from the demodulated signals the difference in the instantaneous amplitudes is established,
- once the difference has been established, information is obtained from the differential signal and compared with predetermined information and, in the case of a match between the obtained and compared information, a wake-up signal is generated,
- in which the two signal parts are formed by diametrically opposed "on-off coding" or "amplitude shift coding",
**characterized in that** the two signal parts do not have any overlapping frequency ranges.

14. Method according to claim 13, in which the comparison of information is only enabled once demodulated information has been identified.

## Revendications

1. Dispositif de réception pour la réception de signaux avec modulation on-off ou modulation par déplacement d'amplitude avec une interface de signal (2), une interface d'alimentation (10), un premier chemin de signal (4), relié à l'interface de signal (2),
- dans lequel le premier chemin de signal (4) présente au moins un dispositif différentiel de redressement (6) et un dispositif de décodage (7) et le dispositif de décodage (7) est relié à un dispositif de traitement (9) via un chemin de réveil (8),
- dans lequel le dispositif différentiel de redressement (6) est exécuté de telle sorte qu'un signal (Sf) mené à travers l'interface de signal (2) est divisé en au moins deux parties de signal de fréquence différentes, celles-ci étant démodulées, la différence des amplitudes momentanées des deux signaux démodulés constituée et le signal différentiel (S) mené vers un dispositif de décodage (7),
- dans lequel le dispositif de décodage (7) est exécuté de telle sorte qu'il obtient au départ du signal différentiel (S) une information, la compare à une information prédéterminée et mène un signal de réveil vers le dispositif de traitement (9) via un chemin de réveil (8) en cas de concordance,
- dans lequel le dispositif de réception est exécuté de telle sorte qu'il est exploitable au moins dans un mode d'exploitation actif et au moins dans un mode d'exploitation de repos, et passe du mode d'exploitation de repos au mode d'exploitation actif lors de la réception du signal de réveil, **caractérisé en ce que** les différentes parties de signal de fréquence ne présentent aucune gamme de fréquences se chevauchant.

2. Dispositif de réception selon la revendication 1, dans lequel le dispositif de traitement (9) présente dans le mode d'exploitation de repos par rapport au mode d'exploitation actif une fonctionnalité limitée et une consommation d'énergie réduite et dans lequel une source d'énergie (11) est reliée à l'interface d'alimentation (10) .

3. Dispositif de réception selon la revendication 1 ou 2, dans lequel un deuxième chemin de signal (5) est exécuté de telle sorte qu'un dispositif transmetteur-récepteur (15) est relié au dispositif de traitement (9) et à l'interface de signal (2),
- dans lequel le dispositif transmetteur-récepteur (15) est exécuté de telle sorte qu'il démodule un signal mené via l'interface de signal (2) et mène les informations y contenues au dispositif de traitement (9), de sorte que celui-ci puisse traiter les informations menées en mode d'exploitation actif.

4. Dispositif de réception selon la revendication 3, dans lequel le dispositif transmetteur-récepteur (15) est exécuté de telle sorte qu'il convertit les informations menées par le dispositif de traitement (9) via le deuxième chemin de signal (5) en un signal et l'émet via l'interface de signal (2).

5. Dispositif de réception selon l'une des revendications 2 à 4, dans lequel un dispositif de commutation (14) est prévu, lequel relie l'interface de signal (2) au premier chemin de signal (4) dans au moins une première position de commutation (I) et avec le deuxième chemin de signal (5) dans au moins une deuxième position de commutation (II) .

6. Dispositif de réception selon la revendication 5, dans lequel le dispositif de commutation (14) est relié au dispositif de traitement (9) via une liaison de commande (13) par le biais de laquelle la dispositif de traitement (9) mène des signaux de commande au dispositif de commutation (14) dans le mode d'exploitation actif et/ou dans lequel le dispositif de commutation (14) est exécuté de telle sorte qu'il adopte automatiquement la première position de commutation (I) à la disparition d'un signal de commande après un laps de temps prédéterminé.

7. Dispositif de réception selon l'une des revendications 2 à 6, dans lequel le dispositif transmetteur-récepteur (15) est relié au dispositif de traitement (9) et exécuté de telle sorte qu'il puisse recevoir un signal de la part du dispositif de traitement (9) soit via le deuxième chemin de signal (5) ou via une deuxième liaison de commande supplémentaire, de manière à ce qu'il puisse, comme le dispositif de traitement (9), alterner entre un mode d'exploitation actif et un mode d'exploitation de repos.

8. Dispositif de réception selon l'une des revendications précédentes, dans lequel le dispositif différentiel de redressement (6) présente deux niveaux de filtrage parallèles (42a, 42b), qui divisent le signal mené en deux gammes de fréquences et deux diodes (43a, 43b), qui démodulent les deux gammes de fréquences divisées respectivement en un signal démodulé et mènent le signal démodulé respectif (s1, s2) vers l'entrée positive ou négative d'un amplificateur différentiel (44).

9. Dispositif de réception selon l'une des revendications précédentes, dans lequel une interface fonctionnelle (12) est prévue, via laquelle un échange d'informations du dispositif de traitement (9) avec un appareil relié au dispositif de réception peut s'effectuer.

10. Dispositif de réception selon la revendication 9, dans lequel le dispositif de traitement (9) est exécuté de sorte à ce qu'il puisse mener un signal au moins vers l'appareil supplémentaire relié au dispositif de réception (1), au moyen duquel signal l'appareil relié est commutable comme le dispositif de traitement (9) entre un mode d'exploitation de repos et un mode d'exploitation actif.

11. Dispositif de réception selon l'une des revendications précédentes, dans lequel le signal reçu et/ou le signal envoyé est un signal à haute fréquence et l'interface de signal (2) est exécutée sous forme d'interface de signal à haute fréquence et dans lequel l'interface de signal à haute fréquence (2) est reliée directement ou via un conducteur haute fréquence avec un dispositif d'antenne (3) .

12. Dispositif de réception selon l'une des revendications 1 à 10, dans lequel le signal reçu et/ou le signal envoyé est un signal sonore et l'interface de signal (2) est exécutée sous la forme d'une interface de signal sonore.

13. Procédé d'exploitation d'un dispositif de réception,
- dans lequel un signal est divisé en au moins deux parties de signal distinctes,
- les deux parties de signal sont simultanément démodulées la différence des amplitudes momentanées des signaux démodulés est constituée,
- après constitution de la différence, une information est obtenue au départ du signal différentiel et comparée à une information prédéterminée et un signal de réveil est généré en cas de concordance entre l'information obtenue et comparée,
- dans lequel les deux parties de signal sont constituées par une modulation on-off diamétralement opposée ou une modulation par déplacement d'amplitude ;
**caractérisé en ce que** les deux parties de signal, ne présentent aucune gamme de fréquences se chevauchant.

14. Procédé selon la revendication 13, dans lequel la comparaison d'une information est uniquement activée après qu'une information démodulée a été reconnue.
